**Europäisches Patentamt**

**European Patent Office**

**Office européen des brevets**

(19)

(11) Veröffentlichungsnummer : **0 100 465**
**B1**

(12) # EUROPÄISCHE PATENTSCHRIFT

(45) Veröffentlichungstag der Patentschrift :
06.05.87

(21) Anmeldenummer : 83106762.4

(22) Anmeldetag : 09.07.83

(51) Int. Cl.⁴ : **B 23 P   6/00**

(54) **Werkzeug zur Reparatur ausgeschlagener Innenflächen an Eisenteilen.**

(30) Priorität : 30.07.82 DE 3228470

(43) Veröffentlichungstag der Anmeldung :
15.02.84 Patentblatt 84/07

(45) Bekanntmachung des Hinweises auf die Patenterteilung : 06.05.87 Patentblatt 87/19

(84) Benannte Vertragsstaaten :
**AT BE CH DE FR GB IT LI NL SE**

(56) Entgegenhaltungen :
**DD-A-   121 885**
**DD-A-   127 153**
**DE-A- 2 605 841**
**US-A- 3 752 951**
**US-A- 4 160 895**

(73) Patentinhaber : **Füwesi, Peter**
**Mosbacher Strasse 13**
**D-6951 Schefflenz-U. (DE)**

(72) Erfinder : **Füwesi, Peter**
**Mosbacher Strasse 13**
**D-6951 Schefflenz-U. (DE)**

(74) Vertreter : **Hach, Hans Karl, Dr.**
**Tarunstrasse 23**
**D-6950 Mosbach-Waldstadt (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Werkzeug zur Reparatur ausgeschlagener Innenflächen an Eisenteilen mit einer um eine Lagerachse rotierend gelagerten, in Richtung der Lagerachse verschieblichen, schräg zur Vorschubrichtung ausrichtbaren Schweißdüse zum Auftragen einer Materialschicht auf die Innenfläche eines Lagers durch mehrere mit Überlappung aufgesetzte Schweißraupengänge.

Bolzenlager schwerer eiserner Geräte unterliegen, bedingt durch die in der Regel hohe mechanische, oft sogar einseitige Belastung starkem Verschleiß. Der Verschleiß am Bolzen kann in der Regel leicht behoben werden durch Einsetzen eines neuen Bolzens. Der Verschleiß an den Lageraugen oder Sacklöchern, in denen diese Bolzen gelagert sind, führt zu ausgeschlagenen Innenflächen. Zur Reparatur ist es bekannt, ein ausgeschlagenes Lagerauge auszuweiten und dann eine vorgefertigte Muffe in das ausgeweitete Auge einzuschweißen, die dann ein neues, ordentliches Lagerauge bietet. Der Reparaturaufwand bei den Lageraugen ist beträchtlich und führt wegen der notwendigen Schweißung auch zu unerwünschten Verwerfungen der Umgebung der betreffenden Augen. Die Lagerbuchse muß aus verhältnismäßig weichem Eisen sein, denn wenn sie hochgradig gehärtet ist, platzt sie von der Schweißung ab. Das bedingt wieder einen höheren Verschleiß des neu eingesetzten Lagerauges.

Beim Gegenstand einer älteren, nicht vorveröffentlichten Europäischen Patentanmeldung EP-A-0 088 305 die Stand der Technik nach Art. 54 (3) EPÜ darstellt wird der beim Ausschlagen entstehenden Materialverlust durch aufgesetzte Schweißraupengänge ersetzt und anschließend auf das richtige Maß abgedreht. Dazu wird ein Werkzeug eingesetzt, mit dem auf eine konzentrische Innenfläche eines Metallteils eine Metallschicht aufgeschweißt werden kann, die aus mehreren mit Überlappung spiralförmig aufgesetzten Schweißraupengängen besteht, mit einem langgestreckten Träger an dem eine Schweißdüse schräg zur Trägerachse gerichtet angeordnet ist, mit einer Stutzenkupplung die am rückwärtigen Ende des Trägers drehbar um die Trägerachse gelagert ist, bei dem Schweißdraht, Schutzgas und Schweißstrom über die Stutzenkupplung in den Träger und innerhalb des Trägers zur Schweißdüse geführt sind.

Aufgabe der Erfindung ist es, dieses Werkzeug so auszugestalten, daß es leicht von einem Schweißgerät zum Aufsetzen der Schweißraupengänge in ein spanabhebendes Werkzeug umrüstbar ist.

Diese Aufgabe wird durch den Gegenstand des Anspruchs 1 gelöst. Durch Austausch des mit der Schweißdüse ausgestatteten vorderen Endes des Trägers gegen ein Trägerendstück mit einem Spanabheber, zum Beispiel einen Schneidstichel oder eine Schleifscheibe, wird das Werkzeug zu einem spanabhebenden Werkzeug, mit dem die ausgeschlagenen Innenflächen zunächst einmal abgedreht werden können und nach dem Auftragen der Schweißraupengänge auf das richtige Maß abgedreht werden können, und mit dem schließlich, wenn es gewünscht ist, auch Gewinde in die reparierten Innenflächen geschnitten werden können. Bemerkenswert ist dabei, daß bei all diesen Arbeitsgängen das Werkzeug in der einmal fixierten, koaxialen Lage zu dem zu reparierenden Sackloch oder Lagerauge verbleiben kann.

Die Zuführungen des Schweißdrahtes, des elektrischen Stromes und des Schutzgases für die Schweißdüse erfolgen durch das Werkzeuggehäuse hindurch von der rückwärtigen Seite an die Schweißdüse heran, so daß die vordere Seite der Schweißdüse frei ist und die Schweißdüse auch verwendbar ist, ein Sackloch zu bearbeiten.

Der Vorschub beim Schweißen und beim Gewindeschneiden erfolgt zweckmäßig über ein Leitgewinde. Das kann für das Schweißen und Gewindeschneiden das gleiche Leitgewinde sein, das empfiehlt sich aber im allgemeinen nicht, weil für beide Arbeitsgänge nur in Ausnahmefällen die gleiche Steigung in Frage kommt. Vorgezogen wird es, für das Schweißen einen ersten Leitgewindeträger und für das Gewindeschneiden einen zweiten Leitgewindeträger vorzusehen, letzteren möglichst an einer Stelle, an der er leicht austauschbar ist.

Für das vor dem Schweißen und nach dem Schweißen erforderliche Abdrehen beziehungsweise Glattdrehen erfolgt der Vorschub zweckmäßig hydraulisch. Während des hydraulischen Vorschubes sind dann die Leitgewinde, zum Beispiel durch Auskoppelung, unwirksam, während beim Vorschub, gesteuert durch Leitgewinde, der hydraulische Vorschub unwirksam ist, zum Beispiel durch Kurzschluß.

Die Erfindung wird nun anhand von Ausführungsbeispielen und der beigefügten Zeichnung näher erläutert.

In der Zeichnung zeigt :

Figur 1   im Schnitt ein ausgeschlagenes Lagerauge,

Figur 2   das Lagerauge aus Figur 1 mit Materialauftrag im Überschuß,

Figur 3   ein Werkzeug zur Reparatur des Lagerauges stilisiert,

Figur 4   das Werkzeug im Schnitt, ausgerüstet zum Schweißen, in zurückgezogener Stellung der Schubwelle, und zwar unter a) den linken Teil und unter b) den rechten Teil,

Figur 5   die Teile aus Figur 4, jedoch nur oberhalb der Mittelachse und in vorgeschobener Stellung der Schubwelle,

Figur 6   einen Ausschnitt aus Figur 4b stark vergrößert und mit weiteren Details,

Figur 7   einen Schweißdüsenträger im Schnitt, der gegen den Schweißdüsenträger aus Figur 4 und 5 austauschbar ist,

Figur 8   das gleiche Werkzeug wie in Figur 4 und 5, jedoch ausgerüstet zum Glattdrehen, und zwar bei zurückgezogener Schubwelle,

Figur 9 den oberen Teil aus Figur 8, jedoch bei vorgeschobener Schubwelle,

Figur 10 das Werkzeug aus Figur 4 und 5, ausgerüstet zum Gewindeschneiden,

Figur 11 den Ausschnitt XI aus Figur 10 vergrößert und mit weiteren Details, und

Figur 12 den Ausschnitt XII aus Figur 10 vergrößert und mit weiteren Details.

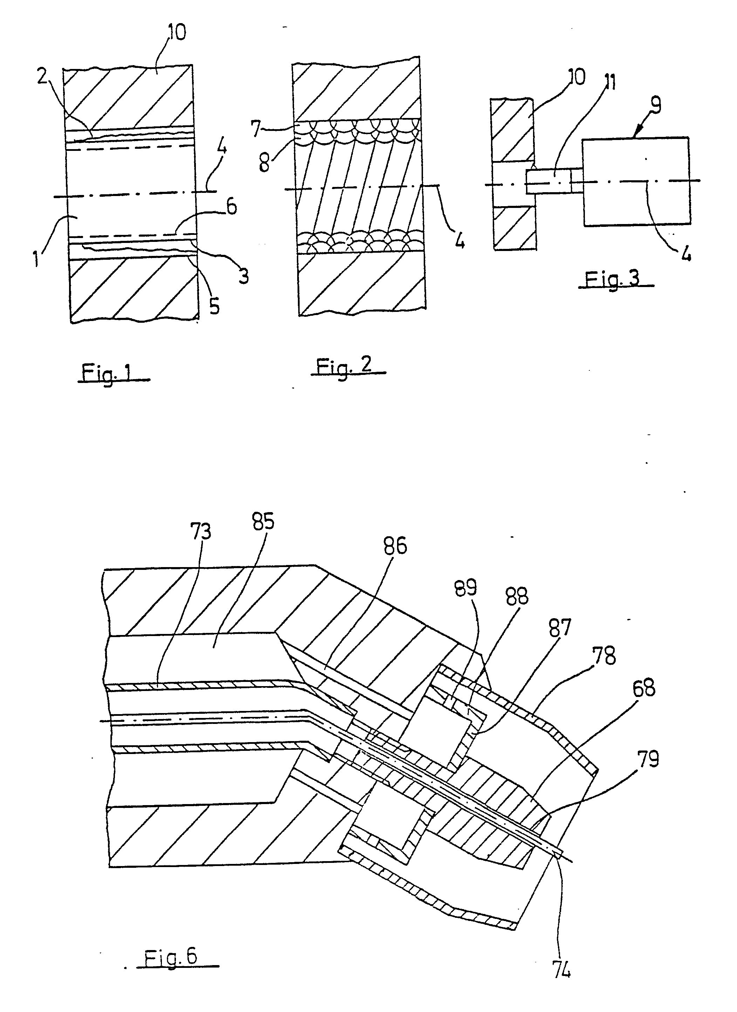

In Figur 1 ist die ausgeschlagene Lagerfläche des Lagerauges 1 mit 2 bezeichnet. Die ordentliche Lagerfläche ist durch die Linie 3 angezeigt. Es wird zunächst auf eine zur Lagerachse 4 koaxiale Bohrung 5 ausgedreht. Dann wird Material im Überschuß aufgetragen bis etwa zu der gestrichelt gezeichneten Linie 6. Das geschieht durch Auftragen von ein oder mehreren, im Beispiel von zwei, Schweißraupenschichten 7, 8, wie in Figur 2 dargestellt. Jede Schweißraupenschicht besteht aus einer einzigen, um die Achse 4 gewendelten Raupe, deren Raupengänge einander überlappend nebeneinanderliegen, so daß sich durch die Schicht beziehungsweise Schichten ein lückenloser Materialauftrag bildet. Nach dem Materialauftrag wird das zunächst überschüssig aufgetragene Material bis auf die ordentliche Lagerfläche gemäß Linie 3 abgedreht. Wenn es sich um ein ausgeschlagenes Gewindeloch handelt, dann wird zunächst auf den Boden des ausgeschlagenen Gewindes glatt abgedreht, dann Material mit Überschuß in der radialen Höhe des Gewindes aufgetragen, dann über dem angestrebten Gewinde glattgedreht und dann das Gewinde eingeschnitten.

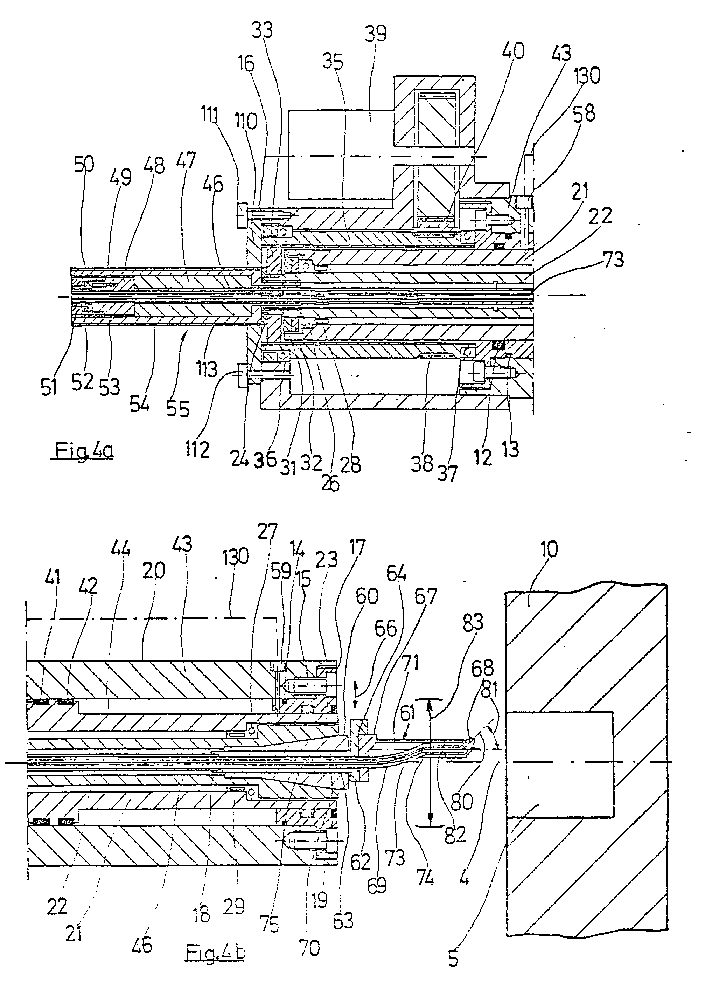

Alle diese Arbeitsgänge können mit einem einzigen Werkzeug 9 durchgeführt werden, das, wie in Figur 3 angedeutet, koaxial zur Achse 4 gegenüber dem eisernen Lagerarm 10 ausgerichtet und fixiert ist. Der Arbeitskopf 11 dieses Werkzeuges 9 ist austauschbar, um das Werkzeug 9 zum Schweißen, Abdrehen oder Gewindeschneiden umzurüsten. Solche Werkzeuge werden in den nachfolgenden Figuren näher beschrieben.

In den Figuren 4, 5, 8, 9 und 10 ist mit 20 ein Werkzeuggehäuse bezeichnet, innerhalb dessen, koaxial zur Achse 4 eine hohle Schubwelle 21 längsverschieblich in Richtung der Achse 4 aber unverdrehbar gelagert ist. Innerhalb der Schubwelle 21 ist eine Arbeitsspindel 22 koaxial zur Achse 4 drehbar um die Achse 4 und unverschieblich gegenüber der Schubwelle 21 gelagert. Das vordere Ende der Arbeitsspindel 22 ist als Werkzeughalter 23 ausgebildet, während das rückwärtige Ende als Antriebsteil 24 ausgebildet ist. Zur Lagerung der Antriebsspindel 22 dienen die Kugellager 26, 27 und Nadellager 28, 29. Mit 31, 32 sind zwei auf die Arbeitsspindel 22 geschraubte Ringmuttern bezeichnet. Die Arbeitsspindel 22 ist hohl, die in ihr steckenden Teile sind austauschbar und werden weiter unten beschrieben.

Auf dem rückwärtigen Ende der Arbeitsspindel 22 steckt ein Zahnrad 33, dessen Außenverzahnung in eine Längsverzahnung 34 eines Antriebsrohrs 35 eingreift, das koaxial zur Achse 4 das rückwärtige Ende der Schubwelle 21 umgebend drehbar aber nicht längsverschieblich mit Kugellagern 36, 37 im Werkzeuggehäuse 20 gelagert ist. Das Antriebsrohr 35 weist eine Außenverzahnung 38 auf, in der ein von einem Antriebsmotor 39 antreibbares Antriebsritzel 40 kämmt. Die Schubwelle 21 ist nach Art eines hydraulischen Kolbens ausgebildet. Die zugehörigen Dichtringe 41, 42 gleiten an einem als hydraulischer Zylinder 43 ausgebildeten Teil des Werkzeuggehäuses 20. In den Zwischenraum 44 zwischen Zylinder 43 und Schubwelle 21 mündet vor und hinter den Dichtringen 41, 42 je eine hydraulische Zuleitung 58, 59. Wird hydraulisches Druckmedium durch die Zuleitung 58 eingedrückt, dann schiebt sich die Schubwelle 21 nach vorn und durch hydraulischen Überdruck an der Zuleitung 59 wird die Schubwelle 21 wieder zurückgeschoben. Dabei nimmt sie die Arbeitsspindel 22 mit. Der Zwischenraum 44 ist abgedichtet durch die Dichtungen 12 bis 15.

Die rückwärtige Stirnfläche des Werkzeuggehäuses 20 ist als Anschlagfläche 16 und die vorwärtige Stirnfläche als Anschlagfläche 17 ausgebildet. Die bis jetzt beschriebenen Teile des Werkzeugs finden für alle Arbeitsarten, also für Schweißen, Abdrehen oder Gewindeschneiden Verwendung und sind deshalb in den Figuren 4, 5, 8, 9 und 10 mit den gleichen Bezugsziffern bezeichnet, weil es sich jeweils um die gleichen Teile handelt.

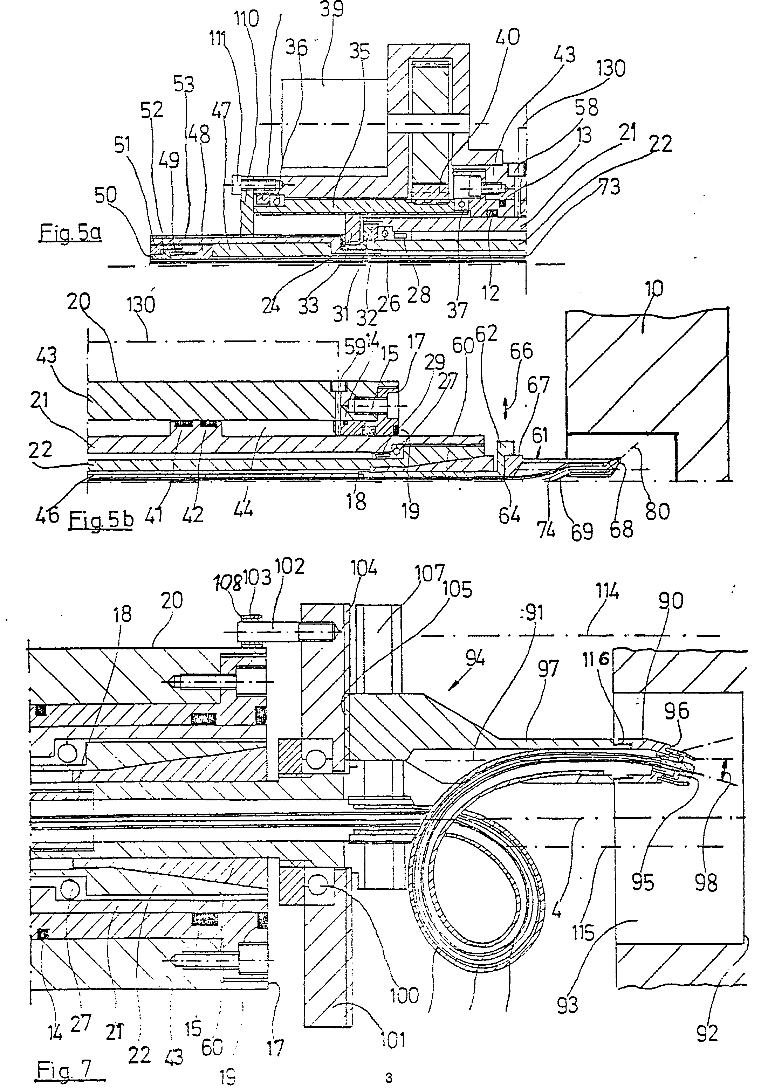

Anhand der Figuren 4 und 5 wird nun die Ausrüstung des Werkzeuges zum Schweißen beschrieben.

An der rückwärtigen Anschlagfläche 16 des Werkzeuggehäuses 20 ist ein Anschlußteil 55 angeschlagen, in dem ein Innenrohr 46 steckt, das bis zum vorderen Ende der Arbeitsspindel 22 reicht und in ein Überwurfgewinde 18 eingeschraubt ist. Das Innenrohr 46 besteht aus elektrisch leitendem Metall und dient als Stromzuleiter. Es ist zu diesem Zweck am rückwärtigen Ende durch die Muffe 47, die aus Isolierstoff besteht, isoliert. Am vorwärtigen Ende ist das Innenrohr durch ein keilförmiges Isolierstück 60 elektrisch isoliert und dazwischen durch Abstand. An das rückwärtige Ende des Innenrohrs 46 schließt ein Stromleiter 48 an, der mit einer Kohlebürste 49 gleitenden Stromkontakt zu einem elektrisch leitenden Flansch 50 hat. Mit 51 ist ein Isolierstück und mit 52 ein Kugellager bezeichnet. Der Flansch 50 steht fest und ist an die nicht dargestellte Schweißstromzuleitung angeschlossen. Der Stromleiter 48 ist durch einen Luftspalt 53 von dem Außenmantel 54 des Anschlußteils 55 getrennt. Wenn sich die Arbeitsspindel 22 dreht, dreht sich das Innenrohr 46 und der Stromleiter 48 und das Isolierstück 51 mit. Stromübergabe erfolgt von dem Flansch 50, isoliert gegenüber dem Außenmantel 54, über den Stromleiter 48 an das Innenrohr 46. Gegen diese Stromführung ist der Außenmantel 54 und das Werkzeuggehäuse 20 isoliert. Der Flansch 50 ist als Anschlußstutzen ausgebildet und durchbohrt. Desgleichen ist der Stromleiter 48 durchbohrt.

Diese beiden Durchbohrungen bilden eine Verlängerung des Innenrohrs 46.

Am Werkzeughalter 23 ist das keilförmige Isolierstück 60 eingesetzt, an dem der allgemein mit 61 bezeichnete Schweißdüsenträger befestigt ist. Ein Anschlußteil 62 des Schweißdüsenträgers 61 ragt mit einem Rohrstück 63 aus elektrisch leitendem Material in die Arbeitsspindel 22 und weist an seinem rückwärtigen Ende das bereits erwähnte Überwurfgewinde 18 auf, das mit dem Innenrohr 46 verschraubt ist. An dem Anschlußteil 62 befindet sich eine radial gerichtete Führung 64, die vorzugsweise nach Art einer Schwalbenschwanzführung ausgebildet ist. Die radiale Richtung ist durch den Doppelpfeil 66 angedeutet und erstreckt sich senkrecht zur Achse 4.

An dem Anschlußteil 62 ist, verschieblich in dieser radialen Richtung gemäß Doppelpfeil 66, der Arbeitsteil 67 gelagert, der an seinem freien Ende eine Schweißdüse 68 trägt. Der Schweißdüsenträger 61 besteht aus elektrisch leitendem Metall und dient als Schweißstromzuleiter vom Innenrohr 46 zur Schweißdüse 68. Mit 69 ist ein flexibles Innenrohr des Schweißdüsenträgers 61 bezeichnet, das an eine zentrale Bohrung 70 des Anschlußteils 62 anschließt und in eine zentrale Bohrung 71 des Arbeitsteils 67 mündet, die zum rückwärtigen Ende der Schweißdüse 68 führt. Es entsteht auf diese Weise eine Rohrleitung, die gebildet ist durch das Innenrohr 46, die Durchbohrungen von Flansch 30 und Stromteiler 48, die Bohrung 70, das flexible Innenrohr 69 und die Bohrung 71, und vom rückwärtigen Ende des Werkzeuges bis zur Schweißdüse führt. Innerhalb dieser Rohrleitung ist ein Gleitschlauch 73 verlegt, der aus elektrisch isolierendem Material besteht und innerhalb dessen der Schweißdraht 74 verlegt ist, der von hinten nachgeschoben wird und zur Schweißdüse 68 führt. Der Außendurchmesser des Gleitschlauchs 73 ist kleiner als der Innendurchmesser der Rohrleitung und der dadurch entstehende Zwischenraum 75 dient als Zuleitung für das Schutzgas. Das Innenrohr 69 ist flexibel und mit Zugabe bemessen zum Ausgleich der Verschiebungen des Arbeitsteils 67 gegenüber dem Anschlußteil 62.

Die Schweißdüse 68 ist mit ihrer Achse 80 im spitzen Winkel 81 zur Achse 4 nach vorn gerichtet und am freien Ende des Arbeitsteils 67 angeordnet. Das Arbeitsteil 67 besteht im wesentlichen aus einem langgestreckten, schmalen Rohr, dessen Außendurchmesser 82 wesentlich kleiner ist als der Durchmesser 83 des Werkzeuggehäuses 20. Die Schweißdüse 68 ragt nur wenig aus der Kontur des Arbeitsteils 67 heraus, damit sie auch in enge Löcher eingeführt werden kann.

Die Schweißdüse 68 vgl. Fig. 6 ist von einem Düsenmantel 78 koaxial umgeben und weist einen Längskanal 79 für den Schweißdraht 74 auf. Der Schweißdraht 74 wird unter elektrischer Kontaktgabe durch diesen Längskanal 79 nachgeschoben. Die Schweißdüse 68 hat unmittelbaren elektrischen Kontakt mit dem Arbeitsteil 67. Die Schutzgasleitung 85 mündet in mehreren Stichkanälen 86, die ihrerseits unterhalb einer Prallplatte 87 münden. Koaxial um die Schweißdüse 68 ist mit Abstand ein Düsenmantel 78 am Schweißdüsenträger 61 befestigt. Die Prallplatte 87 ist im rückwärtigen Bereich des Düsenmantels 78 im Zwischenraum zwischen Düsenmantel 78 und Schweißdüse 68 angeordnet und reicht bis zur Schweißdüse 68 aber nicht bis zum Düsenmantel 78. Außen stützt sie sich auf einem Ring 88 ab, der auf den Umfang verteilt Durchbrüche 89 aufweist und am Arbeitsteil 67 befestigt ist. Das Schutzgas strömt durch die Kanäle 86 gegen die Prallwand 87 und von da durch die Durchbrüche 89 in den Zwischenraum zwischen Düsenmantel 78 und Schweißdüse 68 und bildet so einen Schutzgasmantel für die Schweißstelle.

Zum Vorschub der Arbeitsspindel 22 dient eine Leitgewindemutter 110, die an der rückwärtigen Anschlagfläche 16 anliegt und auf ein Außengewinde 113 des Außenmantels 54 aufgeschraubt ist. Gegen Verdrehung ist diese Leitgewindemutter 110 gesichert durch Sicherungsbolzen 111, 112, die im Werkzeuggehäuse 20 verschraubt sind. Dreht sich die Arbeitsspindel 22, dann folgt dieser Drehbewegung der Anschlußteil 55 und schraubt sich auf dem Leitgewinde in Achsrichtung 4 und nimmt dabei die Arbeitsspindel 22 und die Schubwelle 21 mit. Die Hydraulik ist kurzgeschlossen durch eine Kurzschlußverbindung 130 zwischen den beiden Zuleitungen 58, 59.

Zum Schweißen wird die Schweißdüse 68 durch Verschiebung des Arbeitsteils 67 gegenüber dem Anschlußteil 62 auf den richtigen Abstand zur Innenwand des zu reparierenden Lagerauges 1 gebracht. Das Werkzeug ist nach Figur 4 und 5 ausgerüstet zum Aufschweißen auf die zylindrische Innenwand eines Lagerauges oder eines Sackloches. Wenn die rückwärtige Fläche 92 eines Sackloches 93 mit Schweißraupen belegt werden soll, wird statt des Schweißdüsenträgers 61 der Schweißdüsenträger 94 eingesetzt, der in Figur 7 dargestellt ist.

Der Schweißdüsenträger 94 aus Figur 7 unterscheidet sich von dem Schweißdüsenträger 61 aus Figur 4 und 5 im wesentlichen durch die Anordnung der Schweißdüse 95 an der vorderen Stirnfläche 96 des Arbeitsteils 97 in einem Anstellwinkel 98, der kleiner ist als der Winkel 81 aus Figur 4 und 5. Der Kopf 90 des Schweißdüsenträgers 94 ist um die Achse 91 des Schweißdüsenträgers 94, die zur Achse 4 parallel ist, drehbar und in der eingestellten Drehstellung arretierbar in einer Kupplung 116 gelagert. Die Schweißrichtung kann so von vornherein eingestellt werden, um auch Eckbereiche von Sacklöchern zu erreichen. Außerdem ist die der Führung 64 entsprechende Führung 107 mit einem selbsttätigen radialen Vorschub ausgestattet und erstreckt sich über die Mitte, definiert durch die Achse 4, hinaus, so daß der Schweißdüsenträger 94 zwischen den beiden durch die strichpunktierten Linien 114, 115 angedeuteten Endstellungen verstellbar ist. Zur Verstellung dient ein in Kugellagern 100 gelagerter Führungsteller 101, der gegen Drehbewegungen am Werkzeuggehäuse 20 durch einen Steckbolzen 102, der in einen Durchbruch 103 eingreift, gesichert ist. Der Durchbruch ist an einer Hülse 108 aus Isolierstoff, die am Werkzeuggehäuse 20 befestigt ist.

Der Führungsteller 101 weist ein spiraliges Leitgewinde 104 auf, in das eine rückwärtige Verzahnung 105 des Arbeitsteils 106 eingreift. Der Arbeitsteil 106 ist in einer radial gerichteten Führung 107 verschieblich gelagert und windet sich mit den Drehbewegungen der Arbeitsspindel 22 radial nach außen oder nach innen, je nach der Drehrichtung. Dieser radialen Bewegung folgt die Schweißdüse 95, die entsprechend dem spiraligen Leitgewinde 104 eine Schweißraupe in Form einer archimedischen Spirale auf die rückwärtige Fläche 92 des Sacklochs 93 auflegt. Die Drehbewegung der Arbeitsspindel 22 ist in diesem Fall auf die radiale Stellung der Schweißdüse 95 abgestimmt, so daß die Schweißdüse 95 mit konstanter Geschwindigkeit die Spiralbahn abfährt.

Ein Vorschub in Richtung der Achse 4 wird beim Schweißen der rückwärtigen Fläche 92 des Sacklochs 93 nicht benötigt, dieser Vorschub wird ausgeschaltet. Dazu wird die Leitgewindemutter 110 vom Werkzeuggehäuse 20 entkuppelt, indem man die Sicherungsbolzen 111, 112 herausnimmt. Die Hydraulik bleibt durch die Kurzschlußverbindung 130 unwirksam.

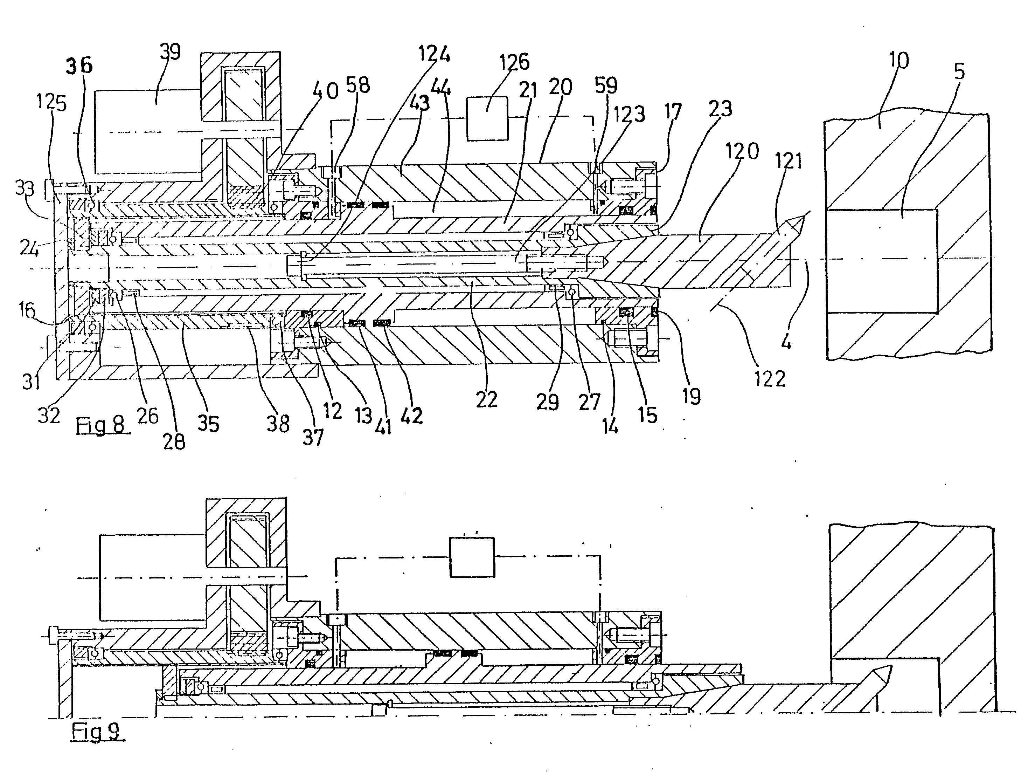

Figur 8 und 9 zeigen das Werkzeug ausgerüstet zum Abdrehen. Auf dem Werkzeughalter 23 sitzt ein als Trägerendstück Stichelträger 120 mit dem Stichel 121, der in Achsrichtung 122 längsverschieblich am Stichelträger 120 gelagert und fixierbar ist, um ihn auf die richtige Eindringtiefe einzustellen. Der Stichelträger 120 wird gehaltert durch den rückwärtig eingeschraubten Haltestab 123, der in der Arbeitsspindel 23 steckt und dort gegen Längsverschiebung und .Drehbewegungen mit dem Riegel 124 verriegelt ist. Auf der rückwärtigen Anschlagfläche 16 sitzt ein Abschlußstück 125. Der Vorschub erfolgt hydraulisch mit dem Hydraulikaggregat 126, das an die Zuleitungen 58, 59 angeschlossen ist.

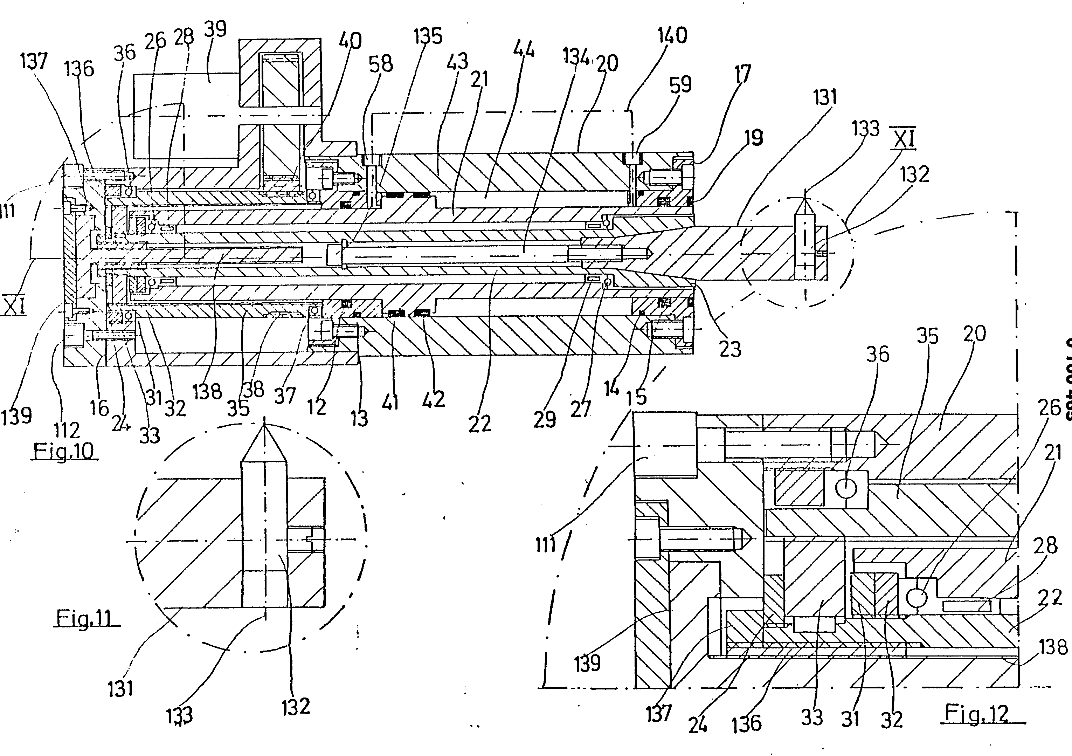

Anhand der Figuren 10 und 11 wird nun das Werkzeug, ausgerüstet zum Gewindeschneiden, beschrieben. Am Werkzeughalter 23 sitzt ein Stichelträger 131 mit einem Gewindeschneidstichel 132, der in Achsrichtung 133 längsverschieblich am Stichelträger 131 gelagert ist, um ihn auf die gewünschte Eindringtiefe einzustellen. Für jede Gewindestrehlung wird diese Eindringtiefe verstellt. Der Stichelträger 131 ist entsprechend wie der Stichelträger 120 aus Figur 8 fixiert durch einen rückwärtig eingeschraubten Haltestab 134, der durch den Riegel 135 in der Arbeitsspindel 22 gegen Verdrehung und Längsverschiebung gesichert ist. Am rückwärtigen Ende der Arbeitsspindel 22 ist eine Leitgewindemutter 136 verdrehungssicher befestigt und durch eine Kontermutter 137 gesichert. Diese Leitgewindemutter 136 ist auf eine Leitspindel 138 aufgeschraubt, die in der Arbeitsspindel 22 berührungslos steckt und an einem rückwärtig auf die Anschlagfläche 16 aufgeschraubten Flanschteil 139 befestigt ist. Die Leitspindel 138 ist gegenüber dem Werkzeuggehäuse 20 verdrehungssicher und axial unverschieblich. Beim Drehen der Arbeitsspindel 22 schraubt sich die Leitgewindemutter 136 auf dem Leitgewinde der Leitspindel 138 vor oder zurück, je nach dem Drehsinn, und nimmt die Arbeitsspindel 22 und die Schubwelle 21 mit. Die Hydraulik ist dabei kurzgeschlossen durch die Kurzschlußleitung 140.

Anstelle des Stichelträgers 120 oder 131 kann auch ein Schleifscheibenträger vorgesehen sein, der anstelle des Stichels eine Schleifscheibe aufweist, die für sich antreibbar ist.

**Patentansprüche**

1. Werkzeug mit dem auf eine konzentrische Innenfläche eines Metallteils eine Metallschicht aufgeschweißt werden kann, die aus mehreren mit Überlappung spiralförmig aufgesetzten Schweißraupengängen besteht, mit einem langgestreckten Träger (22, 23, 46, 47, 48, 54, 60, 61) an dem eine Schweißdüse (68) schräg zur Trägerachse (4) gerichtet angeordnet ist, mit einer Stutzenkupplung (51) die am rückwärtigen Ende des Trägers drehbar um die Trägerachse (4) gelagert ist, bei dem Schweißdraht (74), Schutzgas und Schweißstrom über die Stutzenkupplung in den Träger und innerhalb des Trägers zur Schweißdüse geführt sind,

wobei der Träger an einem Gehäuse (20) längsverschieblich und drehbar gelagert ist, das rückwärtige Ende (55) und das vordere Ende (61) des Trägers von außerhalb des Gehäuses zugänglich, sind ein Antrieb (39, 40) für den Träger am Gehäuse gelagert ist und der Antrieb mit Abstand zum vorderen Ende des Trägers auf den Mittelteil (22) des Trägers eingekuppelt ist.

2. Werkzeug nach Anspruch 1, dadurch gekennzeichnet, daß der Träger Außengewinde (113) aufweist, das in ein Leitgewinde einer am Gehäuse befestigten Leitgewindemutter (110) eingeschraubt ist, daß koaxial zur Trägerachse (4) ein außen verzahntes Antriebsrohr (35) drehbar aber nicht längsverschieblich im Gehäuse gelagert ist, dessen Außenverzahnung mit einem Antriebsritzel (40) kämmt, und dessen Innenseite über ein Kupplungselement (33) längsverschieblich aber unverdrehbar mit dem Träger gekuppelt ist.

3. Werkzeug nach einem der vorhergehenden Ansprüche, dadurch gekennzeichnet, daß das vorwärtige Ende (61) des Trägers im Durchmesser auf ein Rohrstück verjüngt ist, das sich in Richtung der Trägerachse (4) erstreckt und aus dem Gehäuse (20) herausragt, und daß die Schweißdüse (68) am freien Ende dieses Rohrstückes angeordnet ist.

4. Werkzeug nach Anspruch 3, dadurch gekennzeichnet, daß das Rohrstück in einer Führung (64) senkrecht zur Trägerachse (4) verschieblich am Mittelteil (22) gelagert ist.

5. Werkzeug nach Anspruch 4, dadurch gekennzeichnet, daß an der Führung (107) ein von der Drehbewegung des Mittelteils (22) gegenüber dem Gehäuse (20) abgeleiteter, von einem spiraligen Leitgewinde (104) angesteuerter, radialer Vorschub für das Rohrstück (67) vorgesehen ist.

6. Werkzeug nach Anspruch 5, dadurch gekennzeichnet, daß die Schweißdüse (95) mit einem angrenzenden Teil (90) am Rohrstück (97) um die Achse 91 des Schweißdüsenträgers 94 drehbar ist.

7. Werkzeug nach einem der vorhergehenden Ansprüche, dadurch gekennzeichnet, daß der Träger ein von der Stutzenkupplung (51) bis zur Schweißdüse (68) führende Rohrleitung aufweist, in der ein Gleitschlauch (73) für den Schweißdraht (74) steckt und daß der Innendurchmesser der Rohrleitung überall größer ist, als der Außendurchmesser des Gleitschlauches (73) und daß der dadurch freibleibende Platz der Rohrleitung als Schutzgaszuleitung zur Schweißdüse (68) dient.

8. Werkzeug nach einem der vorhergehenden Ansprüche, dadurch gekennzeichnet, daß das mit der Schweißdüse (68) ausgestattete vorwärtige Ende (61) des Trägers gegen ein Trägerendstück (120) austauschbar ist, daß das Trägerendstück (120) angeschlossen etwa so schmal und lang aus dem Gehäuse (20) vorsteht, wie das mit der Schweißdüse ausgestattete vorwärtige Ende (61), daß am freien Ende des Trägerendstücks (120) ein Spanabheber (121) angeordnet ist.

9. Werkzeug nach Anspruch 8, dadurch gekennzeichnet, daß eine hohle Schubwelle (21) koaxial zur Trägerachse im Gehäuse gelagert ist, innerhalb derer der Träger drehbar, aber gegenüber der Schubwelle nicht längsverschieblich gelagert ist, daß die Schubwelle (21) längsverschieblich im Gehäuse gelagert ist und nach Art eines hydraulischen Kolbens, zu dem das Werkzeuggehäuse (20) den zugehörigen hydraulischen Zylinder bildet, als hydraulisches Vorschubaggregat ausgebildet und daß die Leitgewindemutter (110) durch herausnehmbare Sicherungsbolzen (111, 112) an das Gehäuse (20) gekuppelt ist.

## Claims

1. Tool, which makes possible to weld a metal layer consisting of several overlaying spiral beads on a concentric interior surface with a draged on carrier (22, 23, 46, 47, 48, 54, 60, 61), on which a welding nozzle (68) is fixed diagonal to the carrier axis (4), with a connection piece clutch (51) mounted on the backward end of the carrier with the possibility of revolving around the carrier axis (4), on which welding wire (74), protective gas, welding current are led over the connection piece clutch into the carrier and through the carrier to the welding nozzle, at which the carrier is mounted revolving and shipable alongside on a box (20) the backward (55) and the forward (61) end of the carrier are accesable outside of the box a drive (39, 40) for the carrier is mounted at the box and the drive is clutched on the middle of the carrier (22) with distance to the forward end.

2. Tool, according to claim 1, characterized in the way, that the carrier shows an external thread (113), which is screwed into a thread of a leadscrew nut (110) fixed at the box, that coaxial to the carrier axis (4) an external toothed drive tube (35) is mounted revolving but not shipable alongside in the box, the external toothing gears a drive pinion (40) and its internal side is clutched to the carrier axis on a clutch element (33) shipable alongside but not rotating.

3. Tool, according to one of the preceding claims, characterized in the way, that the backward end (61) of the carrier rejuvenates on a piece of tube, extending to the carrier axis (4) and standing out from the box (20) and that the welding nozzle (68) is fixed at the free end of the piece of tube.

4. Tool, according to claim 3, characterized in the way, that the piece of tube is mounted in a guide (64) vertical to the carrier axis (4) shiftable to the middle piece (22).

5. Tool, according to claim 4, characterized in the way, that at the guide (107) from the rotation of the middle piece (22) to the box deriving, from a spiral leading thread (104) steered for, radial feed to the piece of tube (67) is assigned for.

6. Tool, according to claim 5, characterized in the way, that the welding nozzle (95) with a adjacent piece (90) at the tube is revolving around the axis (91) of the carrier of the welding nozzle (94).

7. Tool, according to one of the preceding claims, characterized in the way, that the carrier shows a tube leading from the connection piece clutch (51) to the welding nozzle (68) in which sticks a sliding tube for the welding rod and that the internal diameter of the tube all over is bigger than the external diameter of the sliding tube (73) and the therefore remaining room is used to lead the protective gas to the welding nozzle (68).

8. Tool, according to one of the preceding claims, characterized in the way, that the forward end (61) of the carrier equipped with the welding nozzle (68) is interchangeable with a carrier end piece (120), that the carrier end piece (120) in the connected way is standing out of the box (20) as long and as small as the with the welding nozzle equipped forward end (61), that at the free end of the carrier end piece (120) a metal remover (121) is fixed.

9. Tool, according to claim 8, characterized in the way, that a hollow driving rod (21) is mounted coaxial to the carrier axis in the box inside of it the carrier is mounted revolving but not shiftable alongside to the driving rod, that the driving rod (21) is mounted shiftable alongside in the box and in the way of a hydraulic piston, to which the tool box (20) forms the belonging hydraulic cylinder, formed out as a hydraulic feed drive and that the leadscrew nut (110) is fixed through out-takeable safety bolts (111, 112) to the box (20).

## Revendications

1. Outil, au moyen duquel on peut souder à la surface intérieure concentrique d'une pièce de métal, une couche de métal qui se compose de plusieurs spires de cordon de soudage, de manière à prendre la forme d'une spirale avec recouvrement (22, 23, 46, 47, 48, 54, 60, 61), outil pourvu d'une poutre très allongée, où il est placé un bec de soudage (68), dirigé perpendiculairement à l'axe (4) de ladite poutre, outil, pourvu d'un accouplement à manchon (51) monté à son extrémité arrière, de manière à pouvoir tourner autour de l'axe (4) de la poutre, outil dans lequel, le fil de soudure (74), le gaz inerte de protection et le courant de soudage sont conduits au bec de soudage dans la poutre et à l'intérieur de celle-ci, par l'intermédiaire d'un accouplement à manchon (51), outil, où la poutre est montée dans un carter (20), de manière à pouvoir tourner et à pouvoir se déplacer longitudinalement, outil, où l'extrémité arrière (55) et l'extrémité avant (61) de la poutre sont accessibles de l'extérieur du carter, outil, où il est monté pour la poutre sur le carter, une commande (39-40) et où la commande est accouplée à l'intérieur sur la pièce intermédiaire (22) à distance de l'extrémité avant de la poutre.

2. Outil, conforme à la revendication 1, caractérisé par le fait que la susdite poutre présente un filet extérieur (113), vissé dans le filet directeur d'un écrou directeur (110) fixé au carter, que, coaxialement à l'axe de la poutre (4), il est monté un tube de commande (35) à denture extérieure, (ce tube pouvant tourner mais non se déplacer longitudinalement dans le carter), à savoir un tube dont la denture extérieure s'engrène avec un pignon de commande (40) et dont la face interne est accouplée par l'intermédiaire d'un élément de couplage (33), de manière à pouvoir se déplacer longitudinalement, sans pouvoir tourner avec la poutre.

3. Outil, conforme à une des revendications précédentes, caractérisé par le fait que l'extrémité avant (61) de la poutre est en diamètre effilée sur un morceau de tube qui s'étend dans la direction de l'axe de la poutre (4) et sort du carter (20) de manière à être en saillie sur celui-ci, que le tube de soudage (68) est placé à l'extrémité libre de ce morceau de tube.

4. Outil, conforme à la revendication 3, caractérisé par le fait que le morceau de tube est monté dans un guide (64) perpendiculairement à l'axe de la poutre (4), de manière à pouvoir se déplacer sur la pièce intermédiaire (22).

5. Outil, conforme à la revendication 4, caractérisé par le fait qu'à l'endroit où se trouve le guide (107), il est prévu pour le morceau de tube (67) un organe d'avancement radial, commandé par le filet spiral directeur (104) et dérivé en face du carter (20) par le mouvement de rotation de la pièce intermédiaire (22).

6. Outil, conforme à la revendication 5, caractérisé par le fait que le bec de soudage (95) avec la pièce contiguë (90) du morceau de tube (97) peut tourner autour de l'axe (91) du porte-tube de soudage (94).

7. Outil, conforme à une des revendications précédentes, caractérisé par le fait que la poutre susdite présente une conduite en tubes allant de l'accouplement à manchon (51) au bec de soudage (68), à savoir une conduite dans laquelle on a enfoncé un tube souple glissant (73) pour le fil de soudure (74), que le diamètre intérieur de la conduite en tubes est partout plus grand que le diamètre extérieur du tube souple glissant (73) et que la place ainsi libérée de la conduite en tubes sert de conduite d'amenée du gaz inerte de protection au bec de soudure (68).

8. Outil, conforme à une des revendications précédentes, caractérisé par le fait que l'extrémité (61) de la poutre, à savoir celle qui est équipée d'un bec de soudage (68) peut être échangée contre une pièce terminale (120) de la poutre, que la pièce terminale (120) de la poutre, raccordée de manière à être aussi étroite et aussi longue que l'extrémité avant (61) munie du bec de soudage sort du carter (20) de manière à être en saillie sur celui-ci, qu'à l'extrémité de la pièce terminale (120) de la poutre, il est placé un enleveur de copeaux (121).

9. Outil, conforme à la revendication 8, caractérisé par le fait que dans le carter, il est monté coaxialement à l'axe de la poutre un arbre creux de poussée (21) à l'intérieur duquel la poutre peut tourner mais sans pouvoir se déplacer longitudinalement en face de l'arbre de poussée, que l'arbre de poussée (21) est monté dans le carter de manière à pouvoir se déplacer longitudinalement et qu'à la manière d'un piston hydraulique pour lequel le carter (20) de l'outil sert de cylindre hydraulique correspondant, cet arbre de poussée (21) est constitué de manière à avoir la forme d'un organe hydraulique avanceur, que l'écrou du filet de guidage (110) est accouplé au carter (20) au moyen de boulons de sécurité (111, 112).

0 100 465

Fig. 1

Fig. 2

Fig. 3

Fig. 6

Fig 4a

Fig.4b

Fig.5a

Fig.5b

Fig.7

Fig 8

Fig 9

0 100 465

0 100 465

Fig.10

Fig.11

Fig.12